# EUROPEAN PATENT APPLICATION

(11) **EP 2 015 290 A1**
(43) Date of publication of application: **14.01.2009**
(21) Application number: 08380210.8
(22) Date of filing: 09.07.2008
(51) Int. Cl.: G10K 7/00

(54) **Acoustic device for vehicles**

(30) Priority: 12.07.2007 ES 200701496 U
(71) Applicant: Federal Signal Vama, S.A., 08339 Vilassar de Dalt Barcelona (ES)
(72) Inventor: Bastus Torrens, Jose Matia, 08339 Vilassar de Dalt (Barcelona) (ES)
(74) Representative: Ungria Lopez, Javier

(57) **Abstract**

The acoustic device is intended for application in those vehicles that incorporate a siren for warning of their presence, such as might be ambulances, vehicles of security forces and/or the police, the fire brigade, etc. The feature of the device is that the intensity of the sound emitted by the siren increases as the vehicle increases its speed, for which a power management module (3) has been provided which, depending on the magnitude of the signal (4) which is proportional to the speed of the vehicle , will establish the connection and the corresponding activation of one, two or more loudspeakers (5), these being connected to a sound amplifier (6) located after the conventional sound generator (2) incorporated into the siren (1) of the vehicle. On the basis of this solution, the greater the speed of the vehicle the greater will be the power of the sound emitted, thereby warning citizens and/or drivers of other vehicles of the nearby and rapid circulation of an emergency vehicle (ambulance, police, fire brigade, etc.).

## Description

### OBJECT OF THE INVENTION

As stated in the title of this descriptive specification, the present invention relates to an acoustic device for vehicles, preferably and fundamentally intended for application in the siren incorporated into certain vehicles such as ambulances, police, etc, with the aim that the intensity of the sound emitted by the siren varies according to the actual speed of the vehicle.

The object of the invention is for the sound emitted by the siren of a vehicle to increase progressively as the vehicle increases its speed.

### PRIOR ART OF THE INVENTION

As is known, certain public service vehicles such as might be those of the police, ambulances, the fire brigade, etc., incorporate a siren which is sounded in certain situations, indicating en emergency, such that the sound of the siren is perceived by citizens and drivers so that they do not obstruct the passage of that vehicle.

However, the sound of the siren is always the same and there are times when it would be desirable for have a greater intensity of the actual sound so that it can be heard further away and with greater power, giving citizens and/or drivers more time to allow the vehicle through.

### DESCRIPTION OF THE INVENTION

The device of the invention has been conceived precisely in order to comply with the objective stated in the last paragraph of the previous section.

In this regard, the device described by the present invention, is intended for increasing the intensity of the sound of the siren of the vehicle as the latter increases its speed, presents the particular feature that the siren itself incorporates a power management module which is capable of connecting one or more loudspeakers and of modulating the power coming from an amplifier provided at the output of the corresponding sound generator, all this in accordance with the magnitude of a generated signal and which is proportional to the speed of the vehicle, with which, when that speed is increased, the power management module will act so that a greater intensity of generated sound is produced, either by modulating the power sent to the corresponding loudspeaker or by connecting two or more speakers.

On the basis of this device, the detection of vehicles with sirens is improved since the greater the urgency the greater will be the speed of the vehicle and therefore the greater will be the intensity of the sound emitted.

Also notable is the fact that the inventive device is easily introduced into any kind of siren, being able to be incorporated into it quickly and without any kind of problem since it suffices to connect the power management module to the amplifier and the latter to the loudspeaker or loudspeakers of the siren.

### BRIEF DESCRIPTION OF THE DRAWINGS

In order to complement the description that is going to be made forthwith, and with the aim of aiding a better understanding of the characteristics of the invention, this descriptive specification is accompanied by a set of drawings on the basis of which the innovations and advantages of the device will be more easily understood.
**Figure 1**.- Shows the diagram corresponding to a siren with several loudspeakers with the inventive device.
**Figure 2**.- Shows the graph corresponding to the different intensities of sound according to the speed of the vehicle, said graph corresponding to the functioning of the diagram represented in the previous figure.
**Figure 3**.- Shows the general diagram corresponding to a siren with a single loudspeaker with the inventive device.
**Figure 4**.- Shows the graph corresponding to the variation in the power intensity of the sound, carried out linearly between two speeds.

### PREFERRED EMBODIMENT OF THE INVENTION

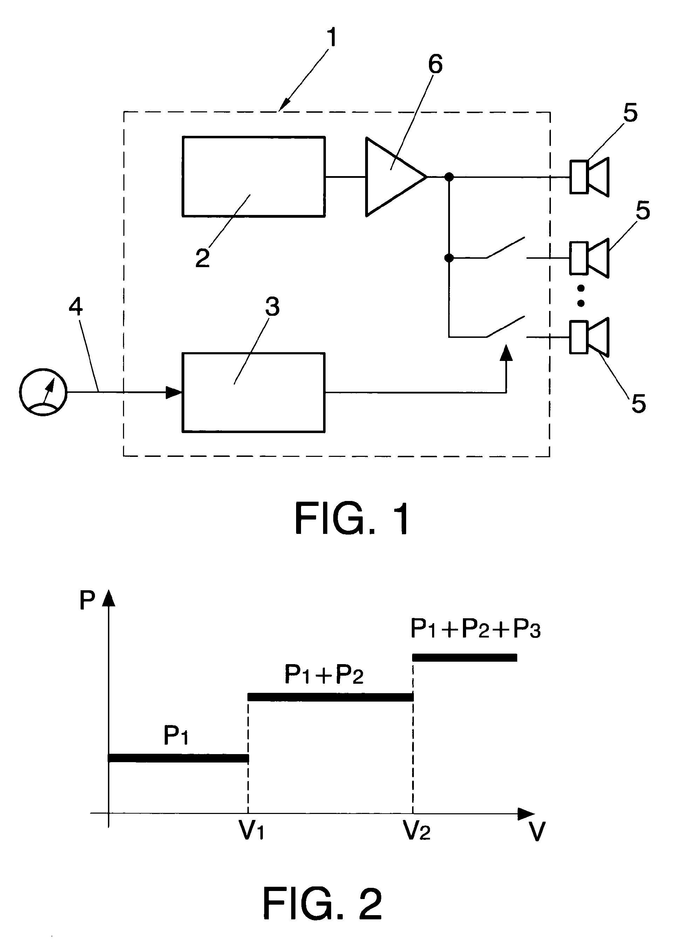

As can be seen in figures 1 and 2, the inventive device is applicable to the siren of a vehicle, referenced in general with the number 1, which comprises a sound generator 2 and, as a novel element, a power management module 3 which, depending on the magnitude of the signal 4 which is proportional to the speed of the vehicle, will establish the connection of one, two or more loudspeakers 5, connected to a sound amplifier 6 located after the sound generator 2.

Figure 2 shows the graph for the case of a siren with three loudspeakers, with the speed "V" of the vehicle being represented on the abscissa axis and the corresponding sound power "P" on the ordinate axis, in such a way that the points V₁ and V₂ correspond to the speeds at which a change in the radial sound power has been asked, with the progressive increase being seen in the powers: P₁; P₁+P₂; P₁+P₂+P₃, in other words, at a speed V₁ the corresponding sound power is P₁, while between speeds V₁ and V₂ the sound power is the sum corresponding to two loudspeakers 5, in other words P₁+P₂, whereas at a higher speed, in other words, above the speed V₂, the sound power is the sum of the three loudspeakers 5, or, which is the same thing, the sum of the sound powers P₁+P₂+P₃.

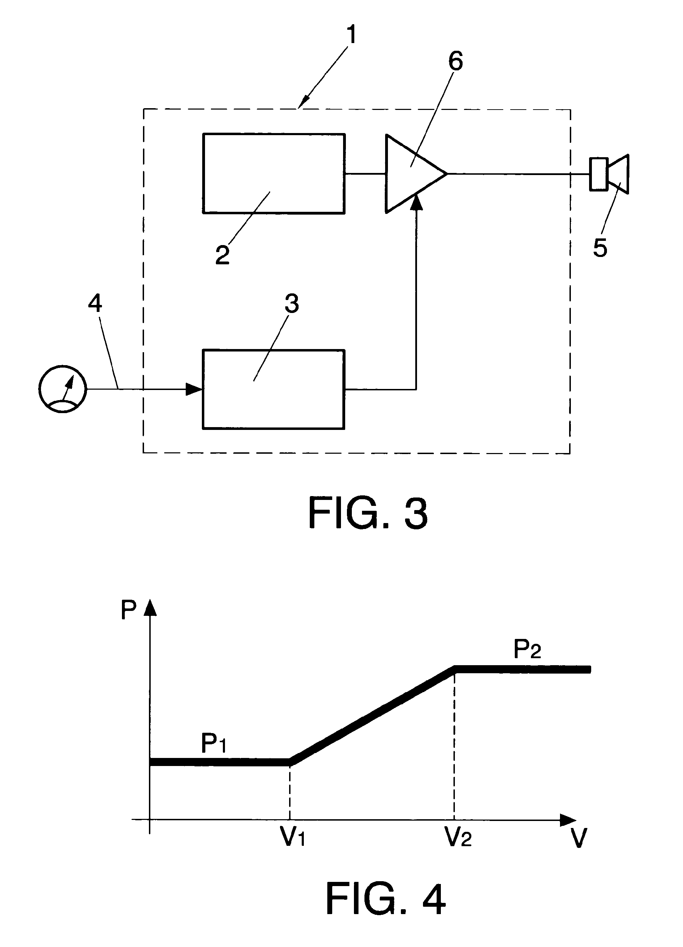

Figure 3 shows the siren 1 with the sound generator 2, the power management module 3, the magnitude of the signal 4 proportional to the speed of the vehicle, along with the amplifier 6 and single loudspeaker 5, such that in this case the amplifier 6 acts on a single loudspeaker 5 increasing the power of the latter in line with the increase in the speed of the vehicle, in accordance with the management carried out by the power module 3 after receiving the signal 4 proportional to the speed of the actual vehicle.

Figure 4 shows the corresponding graph, in which the power P varies linearly from a minimum power P₁ to a maximum power P₂, between the speeds V₁ and V₂.

## Claims

1. **ACOUSTIC DEVICE FOR VEHICLES**, which being applicable to sirens of vehicles such as ambulances, police cars or the like, with a corresponding sound generator (2), is **characterized in that** it is constituted starting from a power management module (3) connected to the output of a sound amplifier (6) in turn connected to the sound generator (2); with one or more loudspeakers (5) being provided after said management module (3), the power intensity of said speakers being governed by said management module (3) in accordance with the amplitude of a generated signal (4) which is proportional to the speed of the vehicle.

2. **ACOUSTIC DEVICE FOR VEHICLES**, according to claim 1, **characterized in that** it includes two or more loudspeakers (5) capable of being connected correlatively by the power management module (3), according to the progressive increase in the speed of the vehicle.

3. **ACOUSTIC DEVICE FOR VEHICLES**, according to claim 1, **characterized in that** the power management module (3) modulates the power delivered to a single loudspeaker (5) connected to the amplifier (6) according to the progressive increase in the speed of the vehicle.
